# EUROPEAN PATENT APPLICATION

(11) **EP 2 239 941 A1**
(43) Date of publication of application: **13.10.2010**
(21) Application number: 09703362.5
(22) Date of filing: 20.01.2009
(51) Int. Cl.: H04N 5/45, H04N 7/173

(54) **MULTI-SCREEN DISPLAY**

(30) Priority: 25.01.2008 JP 2008015163
(71) Applicant: Sharp Kabushiki Kaisha, Osaka-shi, Osaka 545-8522 (JP)
(72) Inventor: MIHASHI, Tadashi, Osaka-shi, Osaka 545-8522 (JP); NAKAZAWA, Masayuki, Osaka-shi, Osaka 545-8522 (JP)
(74) Representative: Müller - Hoffmann & Partner
(86) International application number: PCT/JP2009/050719
(87) International publication number: WO 2009/093557

(57) **Abstract**

Provided is a multi-screen display capable of displaying more images with no sense of discomfort by using multi-screen display while reducing a load on the decoding processing of encoded image contents. The multi-screen display for displaying a plurality of images composed of encoded data including mixed pictures (I, P, B) on a single screen comprises a highlight screen determining section for specifying a screen in which a highlight image out of the images is displayed every predetermined time and a load reducing section for reducing the processing load in a decoding processing section on images other than the image displayed on the screen determined by the highlight screen determining section by deleting the picture (B). With this, a highlighted image is displayed while being changed for each predetermined time, whereby the line of sight of the user can be so navigated as to face a smooth image.

## Description

### TECHNICAL FIELD

The present invention relates to a multi-screen displaying apparatus that concurrently displays a plurality of video contents and relates to a multi-screen displaying apparatus that alleviates a load in processing for decoding encoded video contents.

### BACKGROUND ART

Because of the increase in the number of channels of television broadcast, the increase in the number of recorded programs due to the increase of storage capacity of a recording device, the increase in moving image contents on the Internet, etc., a user has been able to determine a video to view among various video contents (moving images).

Currently, for television programs, the selection of video is performed by selecting a channel from text information using EPG (electronic program guide), by making a selection from thumbnail display having still images of programs and pieces of program information from EPG arranged on the same screen in the case of recorded programs recorded in a recording device, and by narrowing down moving images through a text search using a keyword in the case of the Internet.

Because of larger screen and higher resolution of a displaying apparatus, it has become popular to use a multi-screen displaying system that concurrently displays videos taken out from a plurality of video signals in areas of a screen divided into a plurality of the areas. It is expected that more dissemination of larger screens of displaying apparatuses and higher-resolution displaying apparatuses in future enables a video selecting method for concurrently displaying dozens to hundreds of videos to select a desired video to be viewed among many videos.

A multi-screen displaying system is useful as a means for selecting a desired video among very large number of videos in a large-screen displaying apparatus and, for example, in a support equipment for program selection of Patent Document 1, a display size of a program is changed depending on a length of user's viewing time among programs displayed on a multi-screen to prevent deterioration of efficiency of program selection.

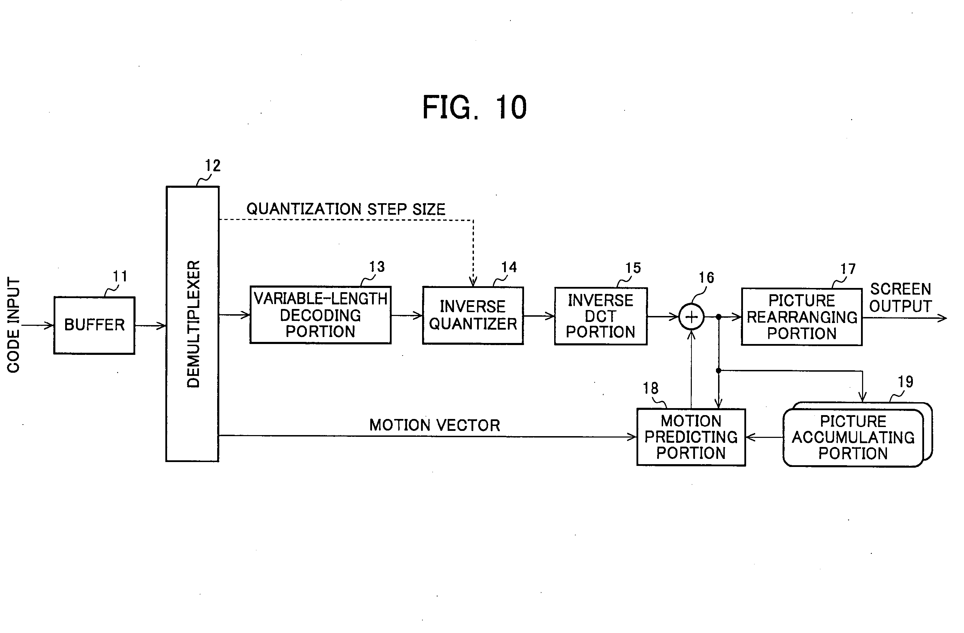

Television broadcast, recording devices, etc., use moving image encoding in the MPEG (Moving Picture coding Experts Group) format. Fig. 10 is a block diagram of an exemplary configuration of this moving image reproduction format.

An apparatus that decodes image data encoded in MPEG sequentially stores input encoded data into a buffer 11, sequentially reads out the input data, and demultiplexes necessary information with a demultiplexer 12. Processes are executed by a variable-length decoding portion 13, an inverse quantizer 14, an inverse DCT (Discrete Cosine Transform) portion 15, and a motion predicting portion 18 for motion compensation using preceding or subsequent frames accumulated in a picture accumulating portion 19 before storage in a frame buffer, and a picture rearranging portion 17 corrects the order of pictures from the frame buffer to read and output the pictures onto a screen in the order to be displayed.

The moving image data encoded in the MPEG format has three image (picture) types based on an inter-frame predicting method, i.e., an I-picture that is an image subjected to intra-image independent encoding, a P-picture that is an image subjected to unidirectional inter-frame predictive encoding, and a B-picture that is an image subjected to bidirectional inter-frame predictive encoding.

Since the multi-screen displaying system concurrently displaying a plurality of videos needs to execute the decoding processing for a plurality of input video signals at the same time and a processing load in a decoding processing portion increases as the number of videos to be concurrently displayed increases, it is difficult to execute the decoding processing for hundreds of moving pictures at the same time.
However, unless the processing load is alleviated in the decoding processing portion, decoding processing per one moving image is enlarged and the maximum number of displayed moving images is problematically reduced.

A moving image decoding apparatus of Patent Document 2 deletes some or all of B-pictures between I and P and between P and P and supplies the rest to a video decoding portion in order to reduce the processing load at the time of decoding in the reproduction of moving image data encoded in the MPEG format.
Patent Document 1: Japanese Laid-Open Patent Publication No. 2005-333524
Patent Document 2: Japanese Laid-Open Patent Publication No. 2000-299867

### DISCLOSURE OF THE INVENTION

### PROBLEMS TO BE SOLVED BY THE INVENTION

However, although the decoding processing may be simplified by removing a code string of an image not used as a reference image for the inter-frame prediction (code string of B-picture), since all the multi-displayed videos are displayed with dropped frames, it becomes difficult to comprehend contents of video and there is a possibility that it is unable to determine whether it is a desired video or not.

The present invention was conceived in view of the above situations and it is therefore the object of the present invention to provide a multi-screen displaying apparatus that uses multi-screen display to display more videos without presenting a feeling of strangeness while alleviating a load of decoding processing for encoded video contents.

### MEANS FOR SOLVING THE PROBLEM

To solve the problem, the present invention has the following configuration.
A multi-screen displaying apparatus of the present invention is a multi-screen displaying apparatus displaying a plurality of videos on a single screen, comprising an emphasized screen determining portion that specifies a screen displaying an emphasized video among the plurality of videos; and a load alleviating portion that reduces a processing load in a decoding processing portion for those other than a video displayed on a screen determined by the emphasized screen determining portion.

If a display size of the video is smaller than a predetermined size, the load alleviating portion may reduce a processing load in the decoding processing portion for the video.
If the video is encoded data including mixture of an I-picture that is two-dimensional compressed video data subjected to information compression within a frame, a P-picture that is three-dimensional compressed video data subjected to information compression by adding motion compensation with the I-picture in a temporally forward direction, and a B-picture that is three-dimensional compressed video data subjected to information compression by adding motion compensation with the I-picture or P-picture in temporally forward and backward directions, the load alleviating portion reduces a processing load in a decoding processing by deleting the B-picture for those other than the video displayed on the screen determined by the emphasized screen determining portion.

The emphasized screen determining portion determines a screen performing emphasis display at predetermined time intervals to guide a user's line of sight to a smooth video.

### EFFECT OF THE INVENTION

According to the present invention, multi-screen display may be used to display more videos without presenting a feeling of strangeness while alleviating a load of a decoding process for encoded video contents.

### BRIEF DESCRIPTION OF DRAWINGS

[Fig. 1] Fig. 1 shows an example of a line-of-sight movement when a line-of-sight movement direction indicates movement in the same horizontal direction.
[Fig. 2] Fig. 2 shows an example of a line-of-sight movement when a line-of-sight movement direction indicates movement forming an F-shape.
[Fig. 3] Fig. 3 shows an example of a line-of-sight movement when a line-of-sight movement direction indicates seamless alternate movement in right and left directions.
[Fig. 4] Fig. 4 is a general block diagram of a multi-screen displaying apparatus according to an embodiment.
[Fig. 5] Fig. 5 is a block diagram of a decoder according to the embodiment.
[Fig. 6] Fig. 6 is a block diagram of a load alleviating portion in the decoder according to the embodiment.
[Fig. 7] Fig. 7 is a flowchart indicating a flow of processing in the decoder according to the embodiment.
[Fig. 8] Fig. 8 is a block diagram of a multi-screen generating portion according to the embodiment.
[Fig. 9] Fig. 9 is a flowchart indicating a flow of processing in the multi-screen generating portion.
[Fig. 10] Fig. 10 is a block diagram of an example of a conventional decoder.

### EXPLANATIONS OF REFERENCE NUMERALS

1...video selecting portion; 2...display position determining portion; 3...display data extracting portion; 4...data accumulating portion; 5...decoding processing portion; 11...buffer; 12...demultiplexer; 13...variable-length decoding portion; 14...inverse quantizer; 15...inverse DCT portion; 16...adder; 17...picture rearranging portion; 18...motion predicting portion; 19...picture accumulating portion; 20...load alleviating portion; 21...display size determining portion; 22...emphasized video determining portion; 23...B-picture skip portion; 6...multi-screen generating portion; 61...resizing portion; 62...brightness adjusting portion; 63...combining portion; 7...displaying portion; and 8...emphasized screen determining portion.

### PREFERRED EMBODIMENTS OF THE INVENTION

A preferred embodiment of a multi-screen displaying apparatus according to the present invention will now be described with reference to the drawings. This embodiment will make a description of the case that the multi-display is performed for video contents from the television broadcast or the Internet accumulated in a data accumulating apparatus such as a hard disc.

First, a split screen for the multi-display needs to be set in advance or by a user. For example, if a screen of a display apparatus is divided into 10 videos in the vertical direction x 10 videos in the horizontal direction, 100 videos are multi-displayed. A screen displaying each of the multi-displayed videos will hereinafter be referred to as a small screen.

If a user gives an instruction of the multi-display, a list of video contents accumulated in the data accumulating apparatus is displayed so as to allow the user to select desired video contents to be multi-displayed from this list.
The selected vide contents are read from the data accumulating apparatus, individually resized to the size of the small screen, and combined as one screen of the displaying apparatus to perform the multi-display.
If the number of selected video contents is larger than the number of the small screens, the multi-display is performed for a plurality of times; otherwise, nothing is displayed on a small screen without video contents to be displayed, or the split screen may be changed.

When selecting desired video contents from the multi-display, for example, a user moves a cursor to the small screen displaying the desired video contents with a cross key of a remote controller included in the multi-screen displaying apparatus and makes a selection with a decision key. When the desired video contents are selected, the video contents are enlarged and displayed on the one screen of the displaying apparatus.

In the present invention, a user's line of sight is guided such that desired video contents are easily selected from the multi-display.
When a person views multi-displayed video contents, it is known that the line of sight generally moves from left to right and from top to bottom and, since this property is utilized in the present invention, a video displayed in a small screen gazed by a user is emphasized relative to videos displayed on other small screens and the small screen displaying the emphasized video is moved to another small screen at certain time intervals to attract user's attention and guide the user's line of sight.

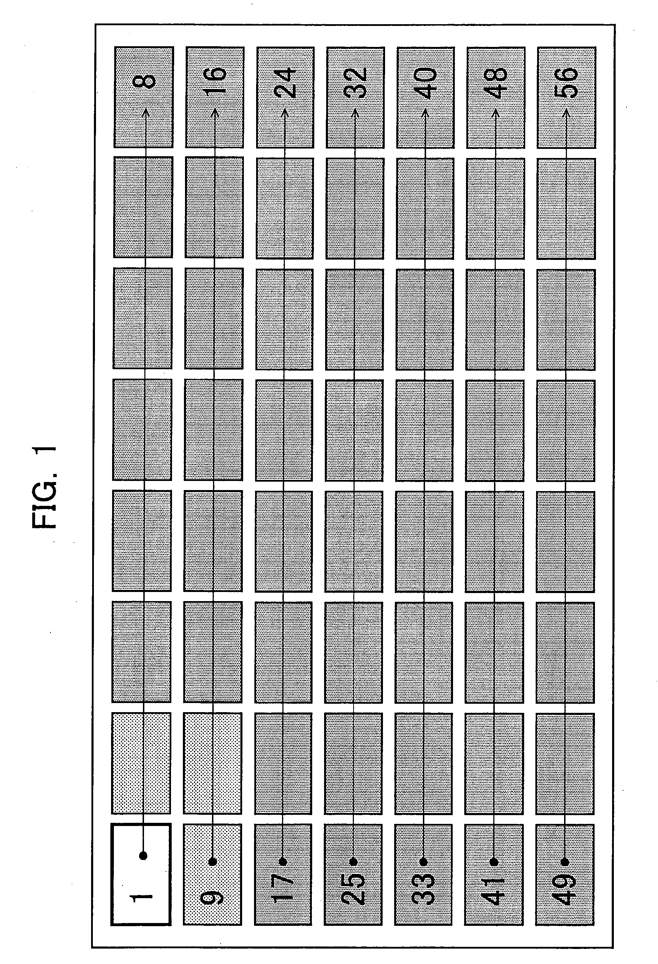

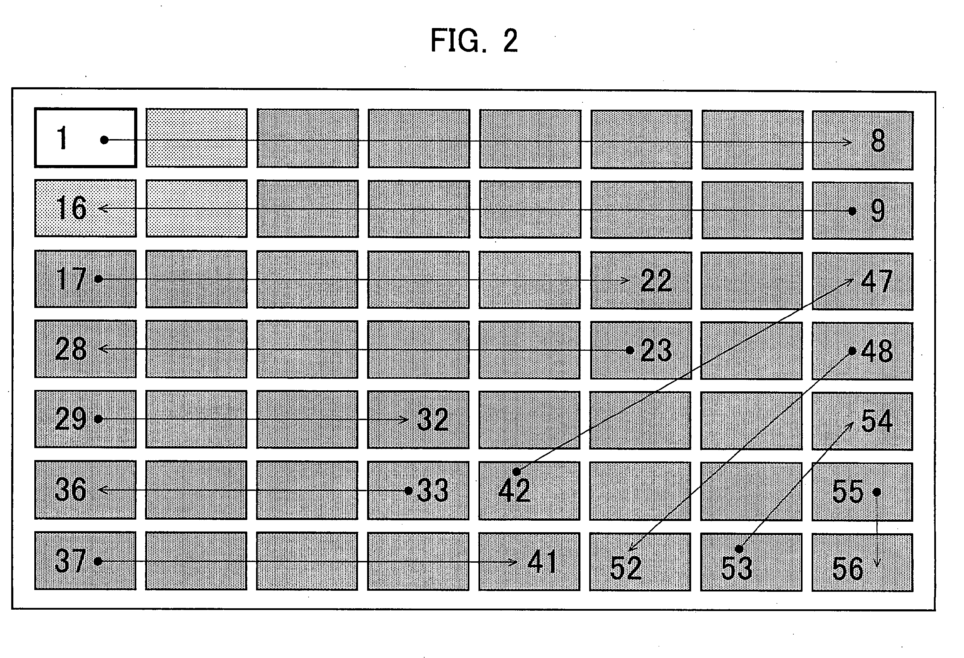

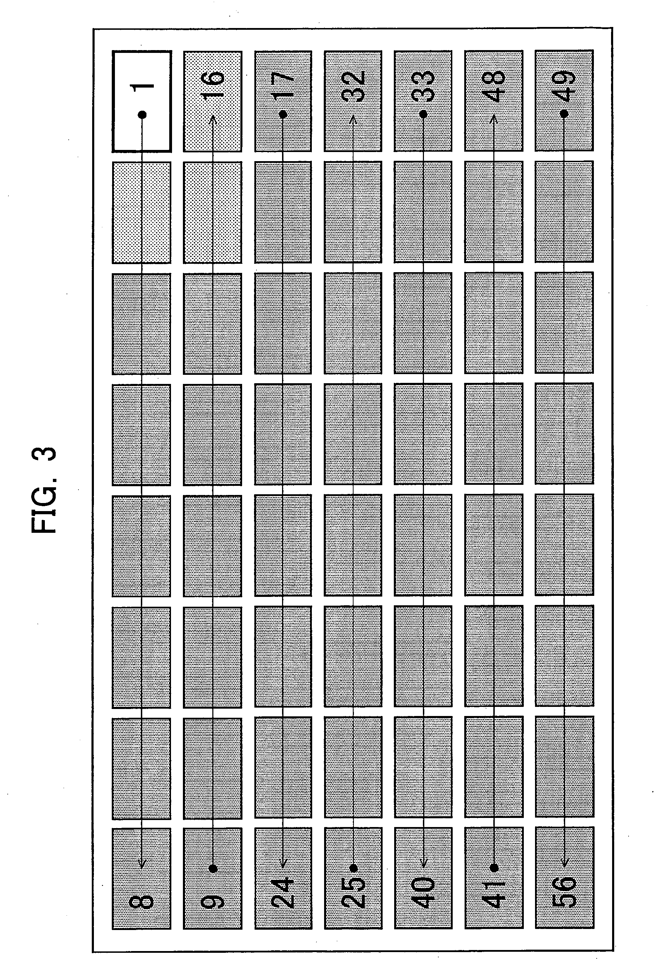

The directions of guiding the user's line of sight include the following movement directions. Fig. 1 depicts the case that the line-of-sight movement direction indicates movement in the same horizontal direction and this is referred to as scanning-type horizontal movement. Fig. 2 depicts the case that the line-of-sight movement direction indicates movement forming an F-shape and this is referred to as F-shaped movement. Fig. 3 depicts the case that the line-of-sight movement direction indicates seamless alternate movement in right and left directions and this is referred to as zigzag-type horizontal movement.

The numbers depicted in Figs. 1, 2, and 3 represent the serial numbers for displaying the emphasized video. In the example of Fig. 1, the small screen of the serial number 1 is emphasized; the surrounding small screens corresponding to the serial numbers 2, 9, and 10 are displayed with weakened emphasis as compared to the serial number 1; and the small screens corresponding to other serial numbers are displayed with further weakened emphasis. When the small screen of the serial number 28 is gazed, this small screen is displayed with emphasis; the surrounding small screens corresponding to the serial numbers 19, 20, 21, 27, 29, 35, 36, and 37 are displayed with weakened emphasis as compared to the serial number 28; and the small screens corresponding to other serial numbers are displayed with further weakened emphasis.
In the examples of Figs. 2 and 3, the emphases on the small screen of the serial number to be gazed and the surrounding small screens are similarly made prominent as compared to other small screens.

If a time interval of movement of the user's line of sight from one small screen to another small screen (hereinafter, transition timing) is set to one second, the small screen displaying the emphasized video is moved every second in accordance with the orders depicted in Figs. 1 to 3 to prompt the user to move the line of sight.

The line-of-sight movement direction is not limited to those directions and may follow the orders reversing the top and bottom or the right and left of the orders depicted in Figs. 1 to 3.
Scanning-type vertical movement and zigzag-type vertical movement may also be available to achieve movement in the vertical direction instead of the horizontal movement.

The order of movement may be set in accordance with a user's preference. This may be realized by providing a movement order recording mode allowing a user to actually perform the movement operation for the multi-screen videos with a remote controller, etc., to record the order of the movement and the movement time (transition timings).

The multi-screen displaying apparatus according to this embodiment will then be described.

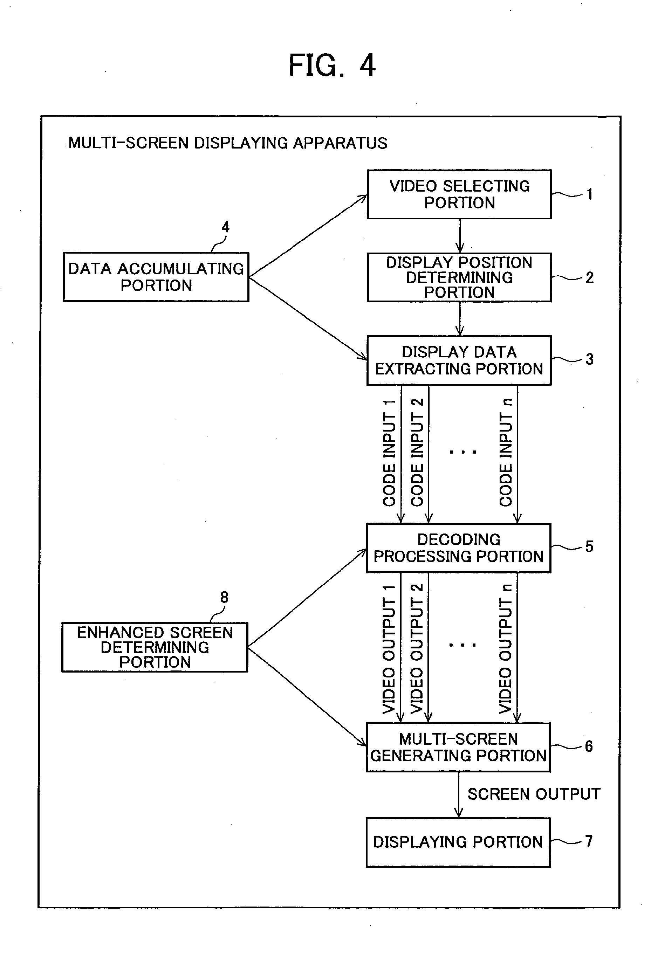

Fig. 4 is a schematic of a configuration of the multi-screen displaying apparatus according to this embodiment. In Fig. 4, the multi-screen displaying apparatus includes a video selecting portion 1, a display position determining portion 2, a display data extracting portion 3, a data accumulating portion 4, a decoding processing portion 5, a multi-screen generating portion 6, a displaying portion 7, and an enhanced screen determining portion 8.

The data accumulating portion 4 accumulates video contents encoded in the MPEG format to be multi-displayed and is made up of a storage medium such as a hard disc having a large capacity and high read-out speed. Those accumulated in the data accumulating portion 4 are video signals transformed by a tuner portion from signals acquired from broadcast waves, video signals acquired from video contents retained by a server connected to a network, and video signals input from another external video output device (e.g., DVD device).

The video selecting portion 1 displays the list of the video contents accumulated in the data accumulating portion 4 when a user gives an instruction of the multi-display, allows the user to select the desired video contents to be multi-displayed from this list, and supplies to the position determining portion 2 the addresses for storing the selected video contents are stored.

The position determining portion 2 determines which small screens display the video contents supplied from the video selecting portion 1. This gives unique numbers (referred to as screen numbers) to the display positions of the small screens at the time of the multi-display in accordance with the preset division number and supplies the screen numbers to the display data extracting portion 3 by making them correspond to the addresses for storing the video contents.

The display data extracting portion 3 concurrently supplies to the decoding processing portion 5 the code data of the video contents supplied from the position determining portion 2. For the code data of the video contents, encoded data are taken out from the addresses for storing the video contents. When the code data are transmitted, the screen numbers of the small screens displaying the videos acquired by decoding the encoded data are added and transmitted to the decoding processing portion 5.

The enhanced screen determining portion 8 generates the screen number of the emphasized small screen and continuously supplies the screen number to the decoding processing portion 5 and the multi-screen generating portion 6 during the transition timing.
Therefore, the following pieces of information are set as predetermined values or by a user.

### (1) Setting of Transition Timing

The transition timing indicates a time interval for changing the emphasized small screen and is set to one second as a default value.

### (2) Setting of Transition Serial Number Table

A transition serial number table is a table that stores the screen numbers of the small screens displayed with emphasis in the order of the emphasis display and is set when the screen division number and the line-of-sight movement direction are determined.
The serial numbers of the emphasis display are determined in accordance with the three types of the line-of-sight movement directions or those set by the user.
For example, although the small screen numbers are the same as the serial numbers of the emphasis display in the case of the scanning-type horizontal movement of Fig. 1, the small screen numbers are not identical to the serial numbers of the emphasis display in the case of Fig. 2 or 3.

The enhanced screen determining portion 8 counts up the order of the emphasis display for each transition timing to acquire the screen number of the small screen at the position corresponding to the count in the transition serial number table and continuously supplies the screen number as the emphasized screen information to the decoding processing portion 5 and the multi-screen generating portion 6 during the transition timing.
If the order of the emphasis display comes to the end of the transition serial number table, the counting up is performed again from the top of the transition serial number table.

The decoding processing portion 5 will then be described.
The decoding processing portion 5 includes a plurality of decoders corresponding to encoded data to concurrently execute the decoding processing on a plurality of supplied encoded data (video signal data).
Each of the decoders executing the decoding processing on a single piece of the encoded data supplies to the multi-screen generating portion 6 the video output acquired by executing the decoding processing on the encoded data supplied from the display data extracting portion 3 and the screen number of the small screen displaying the video.
The decoder executing the decoding processing on a single piece of the encoded data will hereinafter be described.

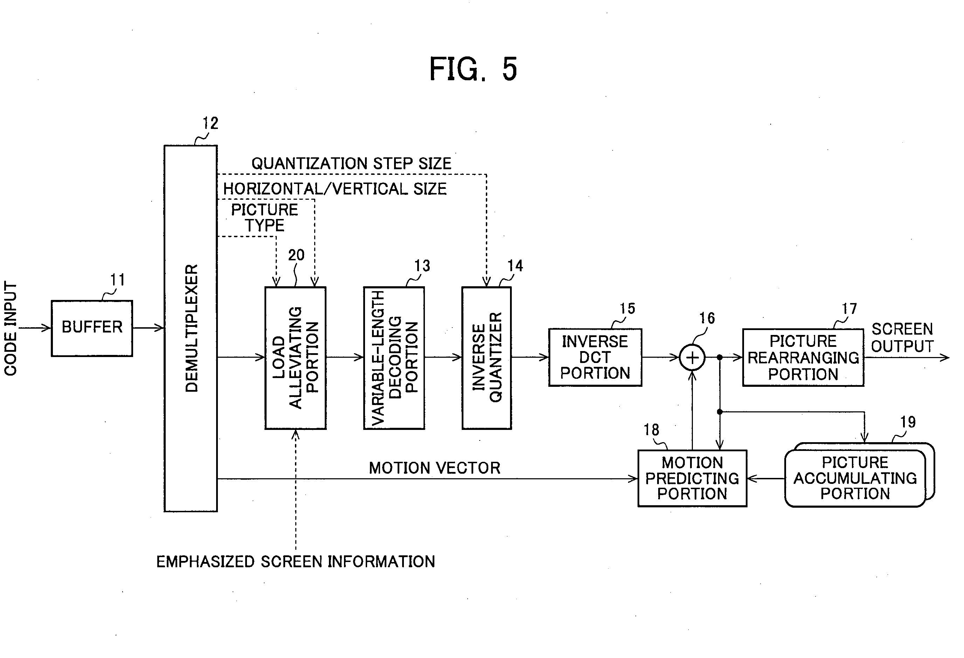

Fig. 5 is a block diagram of a configuration of the decoder according to this embodiment. In Fig. 5, the decoder includes a buffer 11, a demultiplexer 12, a load alleviating portion 20, a variable-length decoding portion 13, an inverse quantizer 14, an inverse DCT portion 15, an adder 16, a picture rearranging portion 17, a motion predicting portion 18, and a picture accumulating portion 19.

The decoder stores the encoded data supplied from the display data extracting portion 3 into the buffer 11 and sequentially reads and supplies the encoded data from the buffer 11 to the demultiplexer 12 in accordance with the progress of the decoding processing.
The demultiplexer 12 analyzes the header of the encoded data and supplies to the load alleviating portion 20 the picture type, the number of pixels in the horizontal direction, the number of lines in the vertical direction, and the encoded data in the case of codes of I, P, and B types. In the case of a motion vector, the motion vector and the encoding mode are supplied to the motion predicting portion 18.

The load alleviating portion 20 sequentially receives codes from the demultiplexer 12 and discards a B-picture code satisfying a predetermined condition among the codes to supply I-picture and P-picture codes directly to the variable-length decoding portion 13 as described later.

The variable-length decoding portion 13 detects a variable-length code from the codes supplied from the load alleviating portion 20, restores the variable-length code to a fixed-length code, and supplies the code to the inverse quantizer 14.
The inverse quantizer 14 inversely transforms a code of a transform coefficient quantized on the encoding side into the original transform coefficient and performs the inverse quantization with a quantization step size from the demultiplexer 12 to supple the transform coefficient to the inverse DCT portion 15.

The inverse DCT portion 15 inversely transforms the transform coefficient from the inverse quantizer 14 into the original pixel value and reproduces a video signal of each macro block subjected to DCT (discrete cosine transform) on the encoding side. The reproduced video signal is supplied to the picture rearranging portion 17 through the adder 16 or is temporarily accumulated in the picture accumulating portion 19.

The motion predicting portion 18 generates a video signal of a current frame by performing the motion compensation with a motion vector for a video signal of a preceding frame from the picture accumulating portion 19. The motion-compensated video signal is added to a video signal from the inverse DCT portion 15 by the adder 16 and is stored in a frame buffer.
The picture rearranging portion 17 corrects the order of pictures from the frame buffer and output the pictures that were read out in the order to be displayed.

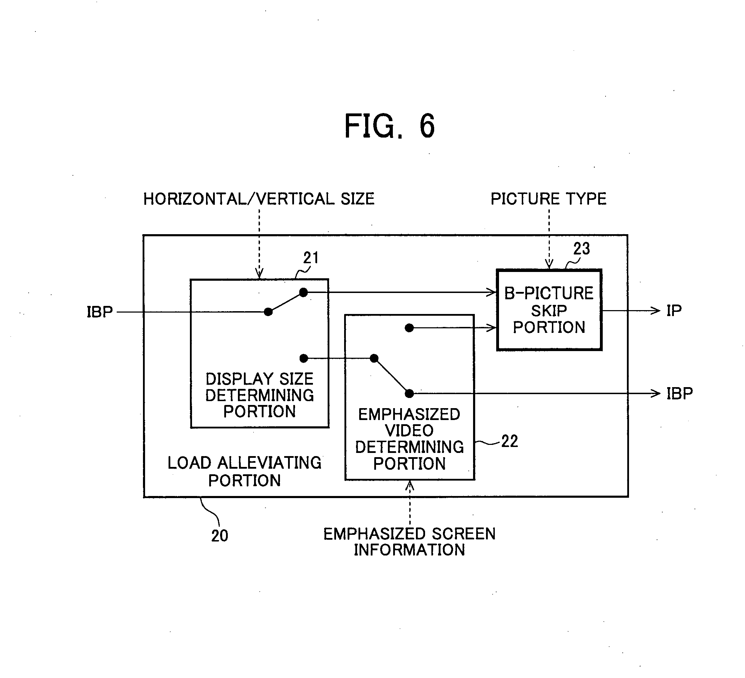

Fig. 6 is a block diagram of a configuration of the load alleviating portion 20 in the decoder according to this embodiment. In Fig. 6, the load alleviating portion 20 includes a display size determining portion 21, an emphasized video determining portion 22, and a B-picture skip portion 23.

In this embodiment, a range for not deleting the B-picture may be set for small screens surrounding a small screen corresponding to the serial number of the emphasis display and it is assumed that a range for this purpose is set in advance by a default value or by a user.
For example, when the B-picture is not deleted only in the gazed small screen, the range is set to zero. When the B-picture is not deleted in small screens within three screens from the gazed small screen in four directions, the range is set to three. Naturally, the range may spread in one/two/three directions instead of four directions.

The load alleviating portion 20 supplies the encoded data supplied from the demultiplexer 12 to the display size determining portion 21 first.
The display size determining portion 21 receives a display size (the number of pixels in the horizontal direction and the number of lines in the vertical direction) of the supplied encoded data to determine whether the display size is not greater than a predetermined threshold value.
If not greater than the predetermined threshold value, the supplied encoded data is supplied to the B-picture skip portion 23. If not less than the predetermined threshold value, the supplied encoded data is supplied to the emphasized video determining portion 22.

Since a user generally views a video at a distance about three times greater than the screen height of the displaying apparatus, it may be considered that the deletion of B-picture is not noticed if vertical and horizontal resolutions of each video are not greater than 1/8 of the number of pixels of the screen width of the displaying apparatus and, therefore, the predetermined threshold value is set to 1/8 of the screen width of the displaying apparatus.

For example, in the case of using a displaying apparatus that has 1080 vertical lines and 1920 horizontal pixels, if the encoded data (video signal) has the number of vertical lines not greater than 135 or the number of horizontal pixels not greater than 240, the value is used as the predetermined threshold value to determine whether the B-picture is skipped.

The emphasized video determining portion 22 determines whether or not a small screen number for the display at the time of decoding the supplied encoded data is the same as the screen number supplied from the enhanced screen determining portion 8 or a screen number within the range for deleting the B-picture.
If the screen number is the same or within the range, the supplied encoded data is directly output and, if the screen number is outside the range, the supplied encoded data is supplied to the B-picture skip portion 23.

The B-picture skip portion 23 skips the supplied encoded data if the B-picture is the picture type of the encoded data supplied from the display size determining portion 21 or the emphasized video determining portion 22. Alternatively, when the picture type of the supplied encoded data is the I-picture or P-picture, the data is directly output as it is.

As above, the load alleviating portion 20 determines whether or not each video signal in the decoding processing corresponds to, or falls within the range of, the video guiding the user's line of sight, and the complete decoding processing is executed for the corresponding video by using all the pictures of the I-picture, the B-picture, and the P-picture since the user's line of sight is directed thereto.
On the other hand, if not corresponding, the B-picture is removed and the decoding processing is executed by using only the I-picture and the P-picture since the user's line of sight is hardly directed.

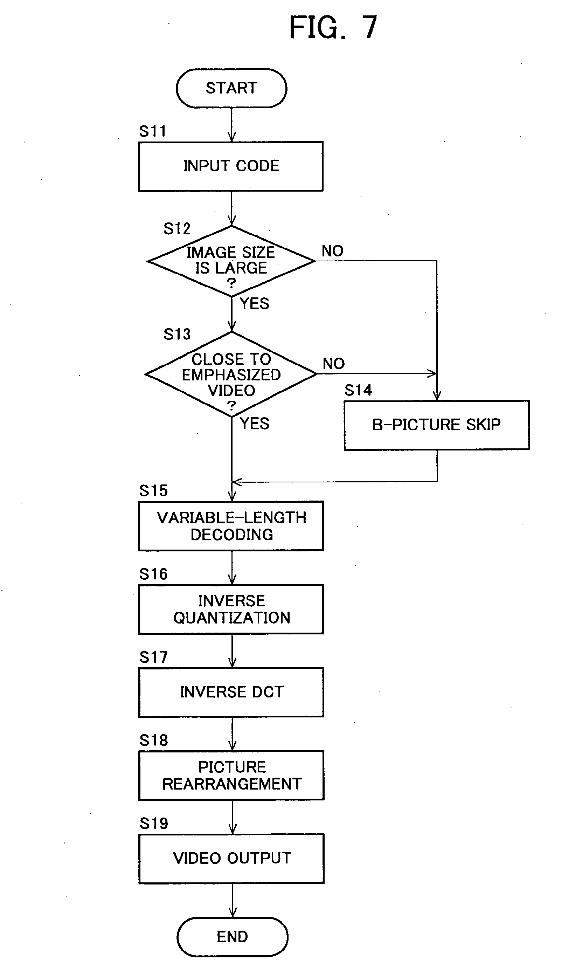

Fig. 7 is a flowchart indicating a flow of processing in the decoder according to this embodiment. With regard to symbols in the following description, P denotes a small screen number for displaying the video when the encoded data on processing is decoded and S denotes an emphasized screen number causing a user to direct the line of sight.

The supplied encoded data is input (step S11) and if the display size of the encoded data is smaller than the predetermined threshold value (step S12/NO), the encoded data of the B-picture is skipped (step S14) and the process goes to step S15.

On the other hand, if the supplied encoded data is greater than the predetermined threshold value (step S12/YES), it is determined whether the small screen number (P) of the supplied encoded data is close to the emphasized screen number (S) (step S13).
For example, the determination is made in accordance with an equation represented by S-3≤P≤S+3. It is determined whether the small screen number corresponds to preceding and subsequent three small screens of the small screen to be emphasized.

If the small screen number (P) of the supplied encoded data is apart from the emphasized screen number (S) (step S13/NO), the encoded data of the B-picture is skipped (step S14) and the process goes to step S15.
On the other hand, if the small screen number (P) of the supplied encoded data is close to the emphasized screen number (S) (step S13/YES), the process goes to step S15.

A video signal is output to which the processing for the variable-length decoding (step S15), the inverse quantization (step S16), the inverse DCT (step S17), and the picture rearranging (step S18) is executed in the same way as the conventional MPEG decoding processing by using the encoded data processed as above (step S19).

The multi-screen generating portion 6 will be described.
The multi-screen generating portion 6 resizes the supplied video signals for small screens into the size of the small screens, combines the video signals at predetermined positions of the multi-display, and outputs the video signals to the displaying portion 7 made up of a liquid crystal display, a plasma display, etc.

Although the emphasis display may be performed for small screens surrounding the small screen corresponding to the serial number of the emphasis display in this embodiment, it is assumed that a range for this purpose is set in advance by a default value or by a user.
For example, when the emphasis display is performed for only the gazed small screen, the range is set to zero. When the emphasis display is performed for small screens within five screens from the gazed small screen in four directions, the range is set to five. Naturally, the range may be in one/two/three directions instead of four directions.

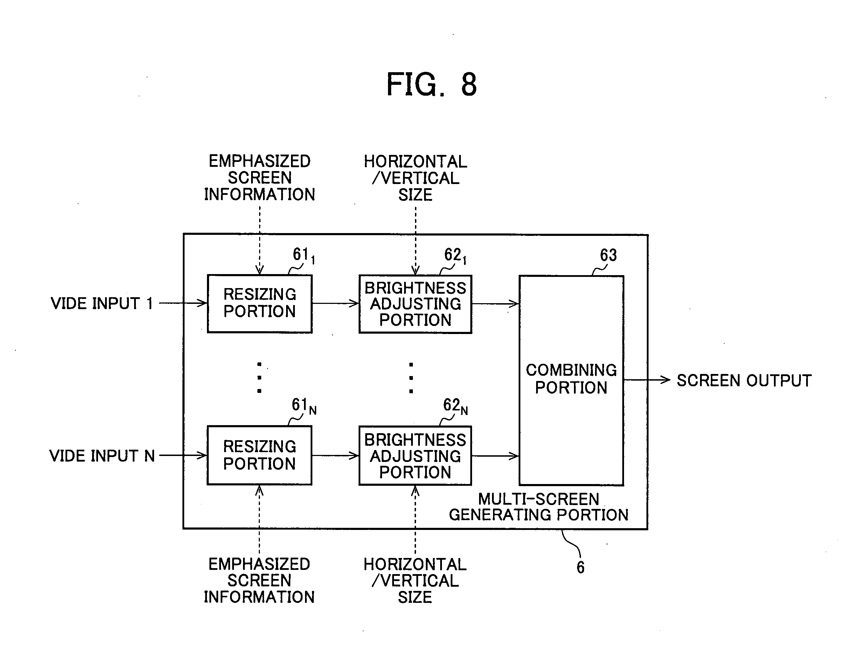

Fig. 8 is a block diagram of a configuration of the multi-screen generating portion 6 according to this embodiment. In Fig. 8, the multi-screen generating portion 6 includes resizing portions 61, brightness adjusting portions 62, and a combining portion 63. The resizing portions 61 and the brightness adjusting portions 62 are provided correspondingly to the small screens to supply their respective outputs to the combining portion 63.

The multi-screen generating portion 6 supplies the video signals supplied from the decoding processing portion 5 to the corresponding resizing portions 61.
The resizing portion 61 acquires the display size of the video to be displayed (the number of pixels in the horizontal direction, the number of lines in the vertical direction), resizes the display size in accordance with the number of horizontal pixels if the display size is horizontally longer than the aspect ratio of the small screen area, and resizes the display size in accordance with the number of vertical pixels if the display size is vertically longer than the aspect ratio of the small screen area.
The resizing portion 61 supplies the resized video signal to the brightness adjusting portions 62.

The brightness adjusting portions 62 determines whether the small screen number for displaying the video signal supplied from the resizing portion 61 falls within a range surrounding the screen number of the emphasis display.
If falling within the range surrounding the screen number of the emphasis display, the brightness of the resized video is maintained or increased, otherwise the video signal with the brightness of the resized video that is reduced such that the user's line of sight is hardly directed thereto is supplied to the combining portion 63.

In the brightness adjustment, a gradual brightness adjustment is possible to be performed in inverse proportion to a distance from the small screen displayed with emphasis, and is possible to execute the display that brightness is reduced as the distance from the emphasis video increases.

The combining portion 63 combines the video signals supplied from the brightness adjusting portions 62 at the display positions on the screen corresponding to the small screen numbers and the video signals are output as video signals corresponding to one screen to the displaying portion 7.

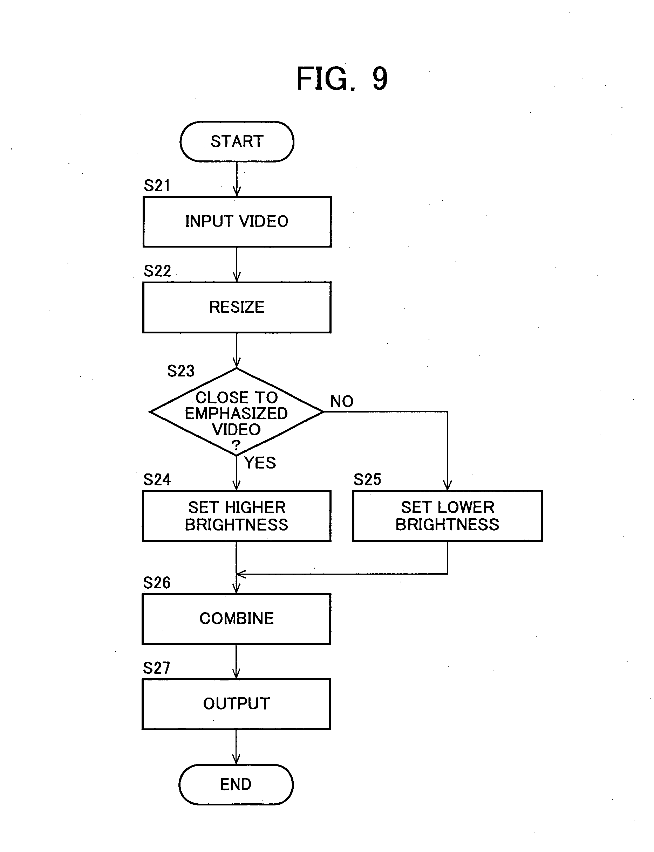

Fig. 9 is a flowchart of a processing procedure of the multi-screen generating portion 6.
Video signals are received from the decoding processing portion 5 (step S21), and the display size of the video to be displayed (the number of pixels in the horizontal direction, the number of lines in the vertical direction) are acquired to resize the display size in accordance with the number of horizontal pixels if the display size is horizontally longer than the aspect ratio of the small screen area and to resize the display size in accordance with the number of vertical pixels if the display size is vertically longer than the aspect ratio of the small screen area (step S22).

It is determined whether the small screen number (P) for displaying the resized video signal falls within a range surrounding the screen number (S) of the emphasis display (step S23).
If falling within the range surrounding the screen number of the emphasis display (step S23/YES), a video signal is generated with the brightness of the resized video maintained or increased (step S24). Otherwise (step S23/NO), a video signal with the brightness of the resized video that is reduced such that the user's line of sight is hardly directed thereto is generated (step S25).
For example, the determination is made in accordance with an equation represented by S-5≤P≤S+5. It is determined whether the small screen number corresponds to preceding and subsequent five small screens of the small screen to be emphasized.

The brightness-adjusted video signals are combined at the display positions on the screen corresponding to the small screen numbers (step S26) and are output as video signals corresponding to one screen to the displaying portion 7 (step S27).

With this configuration, the multi-screen display may be used to display more videos without giving a feeling of strangeness while alleviating the load of the decoding process for encoded video contents.
A desired video is more easily selected by guiding a user's line of sight in a natural movement direction.

Naturally, the present invention is not limited to the above embodiments and may variously be modified and altered within a range not departing from the scope of the present invention.

For example, although the above embodiments have been described in terms of video contents accumulated in a data recording apparatus, if the multi-screen displaying apparatus has a television broadcast reception function, an Internet connection function, or a connection function for an external video output device that reproduces video contents, the video contents captured by these functions may also be multi-displayed without accumulating them in the data recording apparatus.

Although all the B-pictures are deleted in a video having a display size not greater than a predetermined threshold value in the embodiment, only the B-pictures of videos other than the video to be emphasized may be deleted by enabling turning-on/off of the determination of the display size.

Although the encoding format of the video contents is MPEG-4 in the description of the embodiment, the present invention is also applicable to another encoding format, for example, H.264.

## Claims

1. A multi-screen displaying apparatus displaying a plurality of videos on a single screen, comprising: an emphasized screen determining portion that specifies a screen displaying an emphasized video among the plurality of videos; and a load alleviating portion that reduces a processing load in a decoding processing portion for those other than a video displayed on a screen determined by the emphasized screen determining portion.

2. The multi-screen displaying apparatus as defined in claim 1, wherein if a display size of the video is smaller than a predetermined size, the load alleviating portion reduces a processing load in the decoding processing portion for the video.

3. The multi-screen displaying apparatus as defined in claim 1 or 2, wherein the emphasized screen determining portion determines a screen performing emphasis display at predetermined time intervals.

4. The multi-screen displaying apparatus as defined in claim 1, 2, or 3, wherein if the video is encoded data including mixture of an I-picture that is two-dimensional compressed video data subj ected to information compression within a frame, a P-picture that is three-dimensional compressed video data subjected to information compression by adding motion compensation with the I-picture in a temporally forward direction, and a B-picture that is three-dimensional compressed video data subjected to information compression by adding motion compensation with the I-picture or P-picture in temporally forward and backward directions, the load alleviating portion reduces a processing load in a decoding processing by deleting the B-picture for those other than the video displayed on the screen determined by the emphasized screen determining portion.
